# EUROPEAN PATENT APPLICATION

(11) **EP 2 506 402 A2**
(43) Date of publication of application: **03.10.2012**
(21) Application number: 12003761.9
(22) Date of filing: 13.04.2010
(51) Int. Cl.: H02K 3/24, H02K 9/22

(54) **Electric machine**

(62) Divisional of application: 10159792.0
(71) Applicant: Siemens Aktiengesellschaft, 80333 München (DE)
(72) Inventor: Le Besnerais, Jean, 59370 Mons en Baroeul (FR)

(57) **Abstract**

Electric machine comprising a stator having several end windings, a rotor and a cooling means transporting a liquid cooling medium, wherein the cooling means axially projects out of the stator (2) and wherein at least the end windings (5) are encased by a thermally conductive material.

## Description

The invention relates to an electric machine comprising a stator having a stator laminate and several end windings, a rotor, and a cooling means transporting a liquid cooling medium, whereby the cooling means axially projects out of the stator laminate and whereby at least the end windings are encased by a thermally conductive material, whereby the cooling means is a duct-like pipe.

Electric machines and generators in general are becoming more compact due to competitive pressures. The smaller these machines get, the greater the heat densities they will generate. Nowadays, with the advancement of power electronics, electric machines are being driven by means of variable speed drive units presenting an additional heat source due to the harmonics supplied by the inverter. When such machines are operated at low speed the cooling performance is further negatively affected. All of these factors lead to a temperature rise in the machine which will greatly affect its performance and life expectancy.

Particularly in liquid cooled electric machines having copper-based cooling means as tubes, pipes or the like most heat losses arise from so called copper losses. Due to the high axial thermal conductivity of copper most of the heat is usually transferred to the end windings where are located "hot spots". Thereby, the end windings are regularly surrounded by air having bad thermal conductive properties as is known.

Therefore, the end windings have been either air cooled or directly water cooled by the use of copper strands for instance as described in "Liquid Cooling of Turbine-Generator Armature Windings", Kilbourne, C.E.; Holley, C. H.

However, the present measures do not provide a satisfying cooling performance of the electric machine in particular regarding the end windings of the stator.

Hence, it is an object of the invention to provide an electric machine having improved cooling capability, particularly regarding the end windings of the stator.

This is achieved by an electric machine as described above, wherein the cooling means axially projects out of the stator and wherein at least the end windings are encased by a thermally conductive material.

According to the invention the appearance of "hot spots" that is heat accumulation in the region of the end windings is confronted in two different but coactive ways. On the one hand, the given cooling means is axially elongated, i.e. it extends outside the stator, in particular the stator laminate. On the other hand, a thermally conductive material is used to encase the end windings of the stator so as to create a thermal bridge between the end windings and the extended cooling means. Large temperature gradients within the electric machine and in particular regarding the stator are counteracted. It is understood that also other or even all components of the electric machine may be encased by the thermally conductive material. Hence, a standard cooling means may also be used to provide proper cooling of the end windings as it is axially extended, whereby heat conveyance from the jeopardized regions of heat accumulation in particular at the end windings is assured by means of the thermally conductive material. The heat from the end windings is directly conducted to the cooling means and the stator stack. In this respect, the invention offers a constructively simple and cost effective way to obtain improved cooling properties of electric machines.

In favour, the cooling means is a duct-like pipe. Duct-like pipes are known and widely spread for use as standard cooling means. They are regularly made of copper and offer outstanding thermal properties especially in regard of heat conveyance (cf. λ_{cu} ≈ 400 W/mK). Further, copper is a ductile and malleable material which is easily worked. Of course, other thermally conductive materials may be used as well. The duct-like pipe may have a meander-like shape and hence is distributed with a large surface giving rise to good heat exchange within the stator laminate. The cooling means features proper connecting portions like inlets and outlets for connecting with a cooling liquid providing cooling system. The cooling liquid may be deionised water for example.

The thermally conductive material may be directly attached to the stator structure. In this manner, a proper heat exchange between the stator and the thermally conductive material is assured as a close contact, that is the thermally conductive material tightly abuts the stator, is provided. Thus, the creation of air holes, air gaps and the like which would worse heat flux is prevented.

Preferably, the thermally conductive material has a thermal conductivity of at least 100 W/mK. In such a way it is assured that the thermally conductive material shows good heat transfer behaviour i.e. is able to conduct or transfer appropriate amounts of heat from where they originate to the cooling means. Generally, it is intended that the thermally conductive material has λ-values of more than 100 W/mK, anyhow exceptions may also be possible, that is λ-values of the thermally conductive material less than 100 W/mK.

The thermally conductive material is preferably a foamed material. Hence, the invention favourably uses a highly thermally conductive and low density material for encasing the end windings and if need be other parts of the electric machine. Foamed materials are regularly easy to process and can be individually fitted to a wide spectrum of shapes. Further, reworking, finishing and the like are easy to execute as foamed materials may be simply fitted for example by cutting. As an example, the foamed material may be shaped or cut with a stator tooth width so as to be readily inserted between the end windings. For a stable attachment glues or the like may be used to properly mount the foamed material to the stator. Additionally, a number of shaped foamed material parts may be glued together. The foam may have an integral structure, thus providing good specific mechanical properties. The thermally conductive material may alternatively comprise a thermally conductive resin-like material, if need be having special fillers providing further improved thermal properties in particular concerning heat conveyance.

The foamed material favourably has a density in the range of 100 - 800 kg/m³, in particular 300 - 500 kg/m³. Low densities contribute to a reduction of weight and thus support lightweight constructions. Of course, other densities are possible as well. Carbon fibre foams having thermal conductivity of 100 W/mK and densities in the range of 400 kg/m³ are preferably used as thermally conductive foamed material as they show both good thermal properties and low weight.

Alternatively, the thermally conductive material may be a metal. Metals in general have relatively high thermal conductivities so they are capable of providing proper heat transfer and thus counteracting large temperature gradients within the electric machine and particularly within the stator. The metal may be in form of a special shaped component or plate having a shape in accordance with the end windings and/or the part of the cooling means extending the stator thereby building a thermal bridge. Additionally or alternatively, the metal may be intermingled with the end windings thereby assuring both proper attachment and good heat conveyance. The metal may be copper or aluminium for example.

In a further embodiment of the invention the end windings are torn in different angular positions. In the exemplary case of three end windings i.e. three phases the end windings may successively be torn in 0,45 and 90° so as to increase the space for the cooling means giving rise to an improved cooling efficiency altogether. Other angles may be applicable as well, whereby the premise of providing a maximum of space for the cooling means should be kept in mind.

In the following the invention is described in detail as reference is made to the figures, whereby
- fig. 1: shows a principle detail view of an electric machine according to an exemplary embodiment of the invention;
- fig. 2: shows a principle detail view of an electric machine according to an exemplary embodiment of the invention;
- fig. 3: shows a principle detail view of an electric machine according to an exemplary embodiment of the invention;
- fig. 4: shows a principle detail view of an electric machine according to an exemplary embodiment of the invention;
- fig. 5: shows a principle detail view of an electric machine according to an exemplary embodiment of the invention; and
- fig. 6: shows a principle detail view of an electric machine according to an exemplary embodiment of the invention.

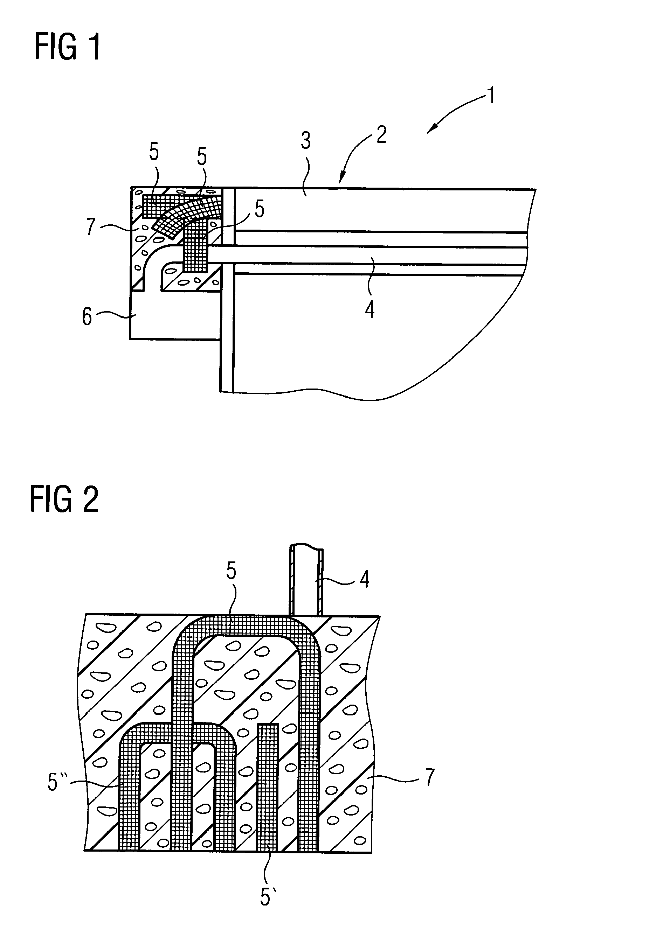

Fig. 1 shows a principle detail view of an electric machine 1 according to an exemplary embodiment of the invention, whereby essentially only relevant parts in view of the invention that is the stator 2 comprising a stator laminate 3 or stack and a cooling means in form of a standard duct-like pipe 4 made of copper can be seen. A not shown cooling liquid like deionised water or the like flows through the duct-like pipe 4, which cooling liquid is supplied by a not shown cooling liquid providing system. The stator 2 comprises three stator windings whereof only the end windings 5 are shown as the remainder of the stator windings is surrounded by the stator laminate 3. The duct-like pipe 4 is elongated in axially longitudinal direction so that it projects outside the stator 2. The duct-like pipe 4 further communicates with a distribution chamber 6. Apart from that, the duct-like pipe 4 is distributed in a meander-like shape throughout the stator 2, whereby the bends are preferably located at the ends of the stator 2, i.e. in the region of the end windings 5. Further, a thermally conductive material in form of a foam 7 encases the end windings 5 of the stator 2, thereby providing heat flow from the end windings 5 to the duct-like pipe 4 in terms of a thermal bridge avoiding problematic heat accumulation in the region of the end windings 5. Thus, heat losses from the end windings 5 are directly conducted to the stator laminate 3 and the extended duct-like pipe 4. The foam 7 is carbon fibre foam having a thermal conductivity of ca. 100 W/mK and a density of ca. 400 kg/m³. Air-cooling and/or liquid cooling by the use of separate copper-strands is not necessary.

The end windings 5 are torn in 0,45 and 90° so as to establish a maximum space for the foam 7 and the duct-like pipe 4, whereby the foam 7 is cut with a stator tooth width so as to be readily inserted in the gap between the end windings 5 and the duct-like pipe 4. The foam 7 is glued to the stator 2 i.e. the stator laminate 3 so that vacancies filled with air may not occur. Further, the foam 7 may be divided in individually shaped foam parts bonded to each other by an adhesive or glue. Mechanically fastening means as screws, bolts, clips, retainers or the like may be alternatively or additionally employed for attaching foamed parts to each other and/or the stator 2.

Figures 2 - 4 show principle detail views of an electric machine 1 according to an exemplary embodiment of the invention depicting different arrangements of the end windings 5, 5', 5" for three different phases, the duct-like pipe 4 and the foam 7. The latter provides a thermal bridge between the end windings 5, 5', 5" and the duct-like pipe 4 dissipating excess heat from the end windings 5, 5', 5" .

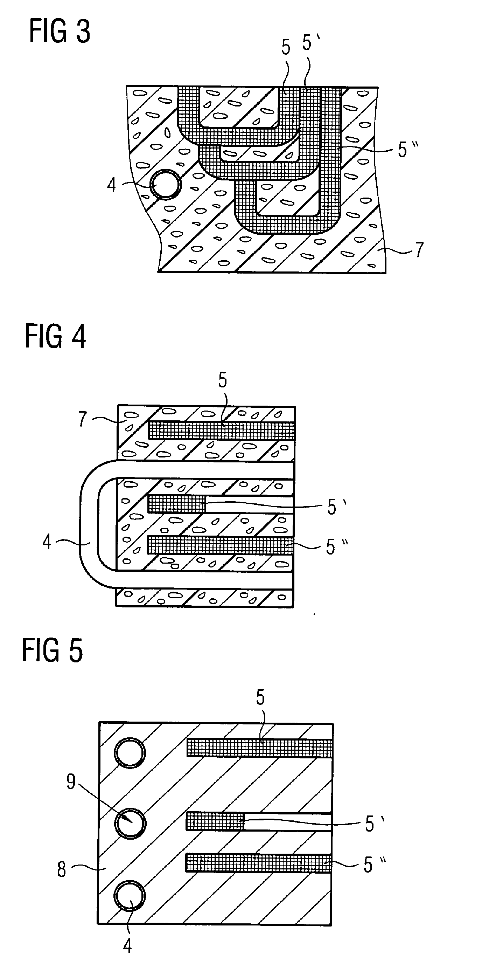

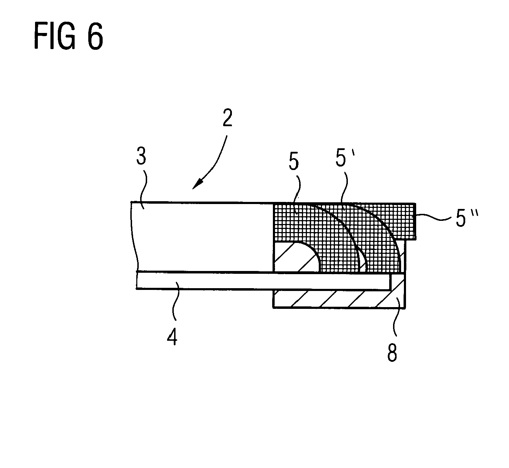

Figures 5 and 6 show principle detail views of an electric machine 1 according to an exemplary embodiment of the invention. The essential difference to the above described embodiments is that a metallic plate 8 is used as thermally conductive material instead of the foam 7. The metallic plate 8 which may be made of aluminium, copper or the like also provides proper heat transfer from the end windings 5 to the duct-like pipe 4. The attachment of the metallic plate 8 may be accomplished by an adhesive, mechanical fastening means and/or by intermingling with the end windings 5 (cf. fig. 5). The metallic plate 8 comprises bores 9 for accommodating the duct-like pipe 4. Otherwise the bores 9 may act as duct-like pipes 4 themselves, whereby a proper connection of the bores 9 and the existing duct-like pipe 4 that is the cooling means of the stator 2 must be assured. Of course, it is also possible that both foam 7 and metallic plate 8 may be employed in order to transfer heat from the end windings 5, 5', 5" to the duct-like pipe 4.

## Claims

1. Electric machine comprising a stator having a stator laminate (3) and several end windings, a rotor, and a cooling means transporting a liquid cooling medium, wherein the cooling means axially projects out of the stator laminate (3) and whereby at least the end windings (5) are encased by a thermally conductive material, whereby the cooling means is a duct-like pipe (4), **characterised in that** the thermally conductive material is a metal in the shape of a metal plate (8) comprising bores (9) for accommodating the duct-like pipe (4) or acting as a duct-like pipe themselves.

2. Electric machine according to claim 1, wherein the thermally conductive material is directly attached to the stator (2).

3. Electric machine according to one of the preceding claims, wherein the thermally conductive material has a thermal conductivity of at least 100 W/mK.

4. Electric machine according to one of the preceding claims, wherein the metal is intermingled with the end windings (5).

5. Electric machine according to one of the preceding claims, wherein the end windings (5) are torn in different angular positions.
